# EUROPÄISCHE PATENTSCHRIFT

(11) **EP 2 840 287 B1**
(45) Veröffentlichungstag und Bekanntmachung des Hinweises auf die Patenterteilung: **18.05.2016**
(21) Anmeldenummer: 14002673.3
(22) Anmeldetag: 31.07.2014
(51) Int. Cl.: F16K 31/126, F16K 37/00

(54) **Justiereinrichtung zum Ein- oder Nachstellen der Lage einer Stellventilstange eines Stellgeräts einer prozesstechnischen Anlage und Stellgerätanordnung**
Adjustment device for setting or adjusting the position of a control valve rod of a control device of a process engineering system and control device assembly
Dispositif d'ajustement destiné à régler ou réajuster la position d'une tige de soupape de réglage d'un appareil de réglage d'une installation technique de processus et système d'appareil de réglage

(30) Priorität: 21.08.2013 DE 102013013831
(43) Veröffentlichungstag der Anmeldung: 25.02.2015
(73) Patentinhaber: Samson Aktiengesellschaft, 60314 Frankfurt (DE)
(72) Erfinder: Fuhr, Philipp, 50676 Köln (DE)
(74) Vertreter: Schmid, Nils T.F.

(56) Entgegenhaltungen:
- WO-A1-2007/075224
- GB-A- 663 416
- GB-A- 2 020 787

## Beschreibung

Die Erfindung betrifft eine Justiereinrichtung zum insbesondere manuellen Ein- oder Nachstellen der Lage einer Stellventilstange eines Stellgeräts einer prozesstechnischen Anlage, wie einer petrochemischen Anlage, einer Brauerei, eines Kraftwerks, oder dergleichen. Des Weiteren betrifft die Erfindung eine Stellgerätanordnung für die prozesstechnische Anlage.

Von WO 2007/075224 A1 ist eine Vorrichtung zum betriebsgemäßen Verbinden einer Antriebsstange an eine Ventilstange bekannt. Die Stangenverbinder-Vorrichtung kann zerlegt werden, um zu Wartungszwecken die Antriebsstange von der Ventilstange zu trennen, sodass diese voneinander gelöst, unabhängig voneinander beweglich sind. Dadurch können Ventilstange und Ventil einfach ausgebaut werden.

Eine gattungsbildende Justiereinrichtung dient auf dem Gebiet der Prozesstechnik dazu, ein Stellventil präzise zu positionieren, wenn die betriebsgemäß, beispielsweise gemäß einer Stellungs-Regelungsroutine eingenommene Stellposition nicht der entspricht, die gewünscht ist. Auf dem Gebiet der Prozesstechnik ist eine vollständige Öffnungsposition sowie eine dichte Schließposition des Ventilglieds des Stellventils insofern nachzujustieren, als beispielsweise ein fortgeschrittener Verschleiß am Ventilglied auszugleichen ist. Beispielsweise kann mittels der Justiereinrichtung der Umfang eines Leckagequerschnitts in der Schließstellung reduziert werden.

Üblicherweise werden die Justiereinrichtungen bereits mit Fertigung des Stellgeräts anmontiert. Auch ist es möglich, die Justiereinrichtung nachträglich anzubauen. Beispielhaft wird eine bekannt Stellgerätanordnung der Anmelderin des Typs 3273 beschrieben, wobei auf die beiliegenden Figuren A, B verwiesen ist. Figur A zeigt eine Querschnittsansicht des bekannten Stellgeräts, wobei Figur B eine Vergrößerung des Teilabschnitts I gemäß Figur A zeigt. Das Stellgerät gemäß den Figuren A und B hat einen pneumatischen Antrieb a, der über eine zweigeteilte Stellventilstange b ein Stellventil c betätigt. Das Antriebsgehäuse d ist mit dem Ventilgehäuse e über eine sich in Stellrichtung S erstreckenden Joch f verbunden, an dem eine manuelle Justiereinrichtung g angeflanscht ist. Die Justiereinrichtung g umfasst ein Handrad h, das über ein Schneckengetriebe i eine sich in Stellrichtung S erstreckende Spindelmutter k in Stellrichtung S hin und her bewegt. Die Spindelmutter k ist in einem ständigen Eingriff mit dem Schneckengetriebe i, so dass bei Betätigung des Handrads h die Spindelmutter k bewegt wird. Die Spindelmutter k hat einen inneren Axialdurchgang *l*, in dem eine stellventilseitige Stellventilstange b verschieblich gelagert ist. Die Spindelmutter k hat einen einstückig ausgebildeten radial nach innen vorstehenden Mitnehmer m, der eine obere Mitnehmeranschlagsseite o und eine untere Mitnehmeranschlagsseite u formt. Die Anschlagsseiten u, o dienen dazu, in einen Mitnehmereingriff mit einer Gegenanschlagsseite u' und o' der Stellventilstange b zu gelangen. Je nach Größe und Dimensionierung des Stellventils kann ein Freilaufbereich p, n zwischen der Stellventilstange b und der Spindelmutter k dadurch verkürzt werden, indem zur Freilaufverkürzung Distanzhülsen r, s einlegt werden. Daraus ergibt sich ein oberer Freilauf n* und ein unterer Freilauf p*.

In den Figuren A und B ist die Stellventilstange b in einer geschlossenen Stellung dargestellt, wobei eine theoretisch weitere Relativbewegung der Stellventilstange b gegenüber der Spindelmutter k um den reduzierten oberen Freilauf n* möglich ist. Hingegen ist eine Öffnungsbewegung der Stellventilstange b durch den unteren Freilauf p* begrenzt. Um die Position der in den Figuren A und B dargestellten Stellung der Stellventilstange b nachzujustieren, muss zuerst die Justiereinrichtung g an dem Handrad h solange betätigt werden, bis der Mitnehmer m um den Freilauf n* nach oben bewegt ist, so dass die Distanzhülse s mit dem oberen Gegenanschlag o' der Ventilstange b in Eingriff kommt. Im Augenblick des Eingriffs kann durch weitere Betätigung der Justiereinrichtung g die Stellventilstange b und damit das Ventilglied aus der geschlossenen Position mittels der Justiereinrichtung g angehoben werden. Nach der gewünschten Nachjustierung ist die Spindelmutter k mit deren Mitnehmer m wieder zurück in die Ausgangsposition zu bringen, um den notwendigen Freilauf n*, p* für den Betrieb des Stellgeräts sicherzustellen. Bei einer Positionsnachjustierung der Stellventilstange b nach unten, also auf das Stellventil c zu, ist der Freilauf p* zu überwinden, bis die untere Mitnehmerseite u mit der Distanzhülse r der zugeordneten Gegenseite u' der Stellventilstange b im Eingriff ist. Folglich müssen bei einem unmittelbaren Richtungswechsel der Justiereinrichtung sämtliche Freiläufe n*, p* der Justiereinrichtung überwunden werden. Zudem begrenzt die bekannte Struktur der Spindelmutter k mit integriertem Mitnehmer m die Bewegungsamplitude eines Stellgeräts deutlich.

Bei bekannten Justiereinrichtungen, die stets im Kopplungszustand zur Stellventilstange verbleiben, besteht ein Nachteil eines höheren Energieverbrauchs dahingehend, als beim normalen Stellbetrieb des Stellgeräts die Mimik und die mechanischen Getriebe auch der Justiereinrichtung mitbewegt werden müssen.

Es ist Aufgabe der Erfindung, die Nachteile des Stands der Technik zu überwinden, insbesondere eine Justiereinrichtung zum Ein- oder Nachstellen der Lage einer Stellventilstange eines Stellgeräts einer prozesstechnischen Anlage dahingehend zu vereinfachen, dass die Justiereinrichtung den Stellgerätbetrieb nicht beeinträchtigt, wobei die Handhabung der Justiereinrichtung bei Reduzierung oder Vermeidung von Stellventilstangenfreiläufen vereinfacht ist.

Diese Aufgabe wird durch die Merkmale von Anspruch 1 gelöst. Danach ist eine Justiereinrichtung zum Ein- oder Nachstellen der Lage einer Stellventilstange eines Stellgeräts einer prozesstechnischen Anlage, wie einer petrochemischen Anlage, einer Brauerei, eines Kraftwerks, oder dergleichen vorgeschlagen. Die Justiereinrichtung dient dazu, die Position der Stellventilstange unabhängig von dem Betrieb des Stellgeräts durchführen zu können. Die Justiereinrichtung kann bei der Fertigung des Stellgeräts bereits montiert sein oder nachmontiert werden. Die Justiereinrichtung umfasst eine Tragstruktur zum Anbringen an einem Joch oder einer Laterne des Stellgeräts. Üblicherweise trägt ein Joch oder Laterne den Antrieb sowie das Stellventil und verbindet die beiden Bauteile. Die Distanz zwischen dem Stellventil und dem Stellantrieb wird über die Stellventilstange überbrückt, die von dem Joch oder der Laterne umgeben ist. Die erfindungsgemäße Justiereinrichtung umfasst ein Betätigungsteil, wie ein Handrad, zum Einleiten der Einstellkraft, die wunschgemäß die Position der Stellventilstange einstellen soll. Neben einem manuell zu betreibenden Betätigungsteil kann auch eine Motorisierung vorgenommen sein, um die das Betätigungsteil einzuleitende Einstellkraft hervorzubringen. Des Weiteren hat die erfindungsgemäße Justiereinrichtung ein einstellkraftübertragungsgemäß mit dem Betätigungsteil verbundenes Abtriebsteil, das zum Übertragen der Einstellkraft die Stellventilstange mitnimmt. Beispielsweise kann das Abtriebsteil als eine Spindelmutter ausgebildet sein, die über eine Spindelwelle mit dem Betätigungsteil kraftübertragungsgemäß in Eingriff steht. Erfindungsgemäß hat die Justiereinrichtung einen insbesondere an dem Abtriebsteil an- und demontierbaren Mitnehmer, so dass das Abtriebsteil je nach Montagezustand seine Mitnehmerfunktion innehat oder verliert. In dem Montagezustand stellt der Mitnehmer einen Kraft- oder Formschluss zum unmittelbaren Übertragen der Einstellkraft von dem Betätigungsteil auf die Stellventilstange bereit. Dabei soll die Einstellkraft zumindest in eine Einstelleinrichtung, vorzugsweise in beide diametral lineare Einstellrichtungen bereitgestellt werden. Mit der erfindungsgemäßen Maßnahme, eine vollständig von der Stellventilstange entkoppelbare Justiereinrichtung bereitzustellen, wobei zusätzlich auch wahlweise der Justiereinrichtung die Mitnehmerfunktion zugeordnet und genommen werden kann, wird der Stellgerätbetrieb in keinem der Montagezustände von der Justiereinrichtung beeinträchtigt. Zudem kann mit Montage des Mitnehmers ein unmittelbarer Zugriff auf die Stellventilstange realisiert werden, wodurch keine Freiläufe zwischen der Stellventilstange und dem Abtriebsteil der Justiereinrichtung überwunden werden müssen.

Bei einer bevorzugten Ausführung der Erfindung bleibt in dem Montagezustand die Stellbewegung der Stellventilstange durch das Stellgerät vollkommen unbeeinflusst von der Justiereinrichtung. Des Weiteren wird in dem Montagezustand jegliche in das Betätigungsteil eingeleitete Einstellkraft nicht auf die Stellventilstange übertragen. Ein ungewolltes Betätigen der Justiereinrichtung und damit ein ungewollte Beeinflussen des Betriebs des Stellgeräts ist ausgeschlossen.

Bei einer Weiterbildung der Erfindung umfasst der Mitnehmer eine Zinkenstruktur mit insbesondere wenigstens einem Paar starren, miteinander verbundenen Zinken. Die Zinkenstruktur hat vorzugsweise im Querschnitt eine U-Form, wodurch die Zinkenstruktur an der offenen U-Seite einschiebbar ist, um den lösbaren Kraft- und Formschluss zwischen dem Abtriebsteil und der Stellventilstange zu realisieren. In dem Montagezustand kann die Zinkenstruktur sowohl mit dem Abtriebsteil als auch mit der Stellventilstange in dem formschlüssigen und lösbaren Verriegeleingriff stehen. Insbesondere bei Erreichen des Verriegelungseingriffs, also des vollständigen Montagezustands des Mitnehmers, kann der Bedienperson eine positive Rückmeldung beispielsweise mittels einer haptischen Rückmeldeeinrichtung mitgeteilt werden. Beispielsweise ist die haptische Rückmeldeeinrichtung durch eine Rastung realisiert.

Bei einer Weiterbildung der Erfindung ist der Mitnehmer zweigeteilt, wobei ein Mitnehmerteil für das Mitnehmen der Stellventilstange nur in der einen Stellrichtung vorgesehen ist, während das andere Mitnehmerteil ausschließlich für die Mitnahme der Stellventilstange in die andere Stellrichtung verantwortlich ist.

Vorzugsweise hat das Abtriebsteil einen Mitnehmersitz zum Aufnehmen des Mitnehmers und die Stellventilstange eine Mitnehmeraufnahme. Der Mitnehmersitz und die Mitnehmeraufnahme können derart aufeinander formabgestimmt sein, dass der Mitnehmer zum Erreichen seines vollständigen Montagezustands, insbesondere des lösbaren Verriegeleingriffs, in einer Linearbewegung, vorzugsweise im Wesentlichen senkrecht zur Längsrichtung der Stellventilstange eingeschoben wird.

Bei einer bevorzugten Ausführung der Erfindung sind in dem Montagezustand, insbesondere in dem Verriegeleingriff, der Mitnehmer sowohl in dem Mitnehmersitz als auch in der Mitnehmeraufnahme im Wesentlichen spielfrei, so dass die Einstellkraft unmittelbar von dem Abtriebsteil über dem Mitnehmer auf die Stellventilstange übertragen wird. Es sei klar, dass der Mitnehmer und der Mitnehmersitz sowie die Mitnehmeraufnahme derart dimensioniert sein sollen, dass der Mitnehmer entsprechend einfach und ohne Spezialwerkzeug in den Mitnehmersitz und in die Mitnehmeraufnahme eingesetzt werden kann. Hierzu können auch Spielpassungen in Betracht gezogen werden, in denen ein leichtes Spiel besteht. Vorzugsweise greifen in dem Montagezustand sich zugewandte Zinkeninnenabschnitte des Zinkenpaars in die Mitnehmeraufnahme der Stellventilstange und voneinander abgewandte Zinkenaußenabschnitte des selben Zinkenpaars in den Mitnehmersitz des Abtriebsteils.

Bei einer Weiterbildung der Erfindung ist der Mitnehmersitz und/oder die Mitnehmeraufnahme mit einem Signalgeber versehen, der bei Einnahme und/oder Nicht-Einnahme der Montageposition des wenigstens einen Mitnehmers ein Montage- oder Demontagesignal abgibt und vorzugsweise an einen Regler oder an eine Steuerungseinrichtung transferiert. Der Regler und/oder die Steuerungseinrichtung kann beispielsweise im Falle eines Montagesignals eine Stellbetätigung der Stellventilstange mittels des Stellgeräts unterbinden und/oder nur im Falle eines Demontagesignals die Stellbetätigung zulassen.

Bei einer Weiterbildung der Erfindung haben der Mitnehmersitz und die Mitnehmeraufnahme für den Mitnehmer einen Einschubzugang, der derart geformt ist, dass der Mitnehmer dessen Montageposition in dem Mitnehmersitz und in der Mitnehmeraufnahme mittels einer im Wesentlichen rein translatorischen Einschubbewegung erreicht. Der Mitnehmer kann einen Anschlag aufweisen, der mit dem Abtriebsteil anschlagend zusammenwirkt, um die Einschubbewegung des Mitnehmers zu begrenzen.

Bei einer bevorzugten Ausführung der Erfindung hat die Justiereinrichtung vorzugsweise ortsfest an der Tragstruktur eine insbesondere abtriebsteilferne Verstauaufnahme zum Unterbringen des wenigstens einen Mitnehmers in dessen Demontagezustand. Die Verstauaufnahme kann mit einer Sicherungseinrichtung versehen sein, die bei Belegung der Verstauaufnahme durch die Mitnehmer eine Verstellung des Betätigungsteils blockiert. Alternativ oder zusätzlich kann die Verstauaufnahme mit einem Signalgeber versehen sein, der bei Belegung und/oder Nicht-Belegung der Verstauaufnahme durch den Mitnehmer einen Mitnehmer-Verstau- und/oder einen Mitnehmereinsatzsignal abgibt und vorzugsweise an einen Regler oder eine Steuereinrichtung transferiert. Der Regler und die Steuereinrichtung kann beispielsweise im Falle eines Mitnehmereinsatzsignals die Stellbetätigung der Stellventilstange mittels des Stellgeräts unterbinden und/oder nur im Falle eines Mitnehmer-Verstausignals die Stellbetätigung zulassen.

Bei einer bevorzugten Ausführung der Erfindung ist das Abtriebsteil längs der Tragstruktur insbesondere an wenigstens einer der sich in Stellrichtung erstreckenden Trägersäule oder Längsträger ablaufend, insbesondere abrollend geführt. Hierzu kann beispielsweise eine Schlitten-Schienen-Führung vorgesehen sein, bei der insbesondere die Schienen-Funktion zumindest teilweise durch eine Schneck, insbesondere eine Schneckenwelle, eines das Abtriebsteil antreibenden Schneckengetriebes und/oder durch die Tragstruktur der Justiereinrichtung selbst realisiert sein. Zur Bildung insbesondere eines Schlittens kann das Abtriebsteil einen Ablaufvorsprung, insbesondere eine Abrollnase, mit vorzugsweise einem Wälzlager aufweisen, der insbesondere an einer oder zwei sich in Stellrichtung erstreckenden Längssäulen der Tragstruktur ablaufen kann.

Bei einer bevorzugten Ausführung der Erfindung ist ein Einstellgetriebe, insbesondere ein Schneckengetriebe und/oder Spindelgetriebe, zwischen dem Betätigungsteil und dem Abtriebsteil einstellkraftübertragungsgemäß angeordnet. Dabei kann eine Gewindespindel mit dem Abtriebsteil für eine lineare Hin- und Herstellbewegung des Abtriebsteils in einem Gewindeeingriff stehen. Alternativ oder zusätzlich kann die Tragstruktur einen geschlossenen oder zumindest stellventilseitig offenen, vorzugsweise U-förmigen Rahmen aufweisen, wobei insbesondere an Horizontalschenkeln des Rahmens die sich vertikal erstreckende Gewindespindel gelagert ist. Vorzugsweise sind die Horizontalschenkel durch wenigstens eine sich in Stellrichtung erstreckende Längssäule fest verbunden. Eine der Stellventilstange zugewandte Längssäule oder mindestens ein Horizontalschenkel bildet einen Montageflansch zum Anbringen der Justiereinrichtung an ein Joch oder eine Laterne des Stellgeräts. An dieser Längssäule kann eine Säulenunterbrechung zum formangepassten Aufnehmen einer Montagekontur des Jochs oder der Laterne vorgesehen sein, wobei insbesondere der Rahmen zusätzlich sich diametral gegenüberliegende seitliche Zugriffsöffnungen begrenzt, über die der Mitnehmer montierbar und demontierbar ist.

Des Weiteren betrifft die Erfindung eine Stellgerätanordnung für eine prozesstechnische Anlage, wie eine petrochemische Anlage, eine Brauerei, eine Kraftwerk, oder dergleichen, mit einer Stellventilstange, die von einem Stellantrieb insbesondere gemäß einer Regelungsroutine eines Stellungsreglers stellbar ist. Des Weiteren hat die Stellgerätanordnung eine erfindungsgemäße, oben beschriebene Justiereinrichtung. Die Justiereinrichtung nimmt die Stellventilstange zum Ein- oder Nachstellen deren Lage an einer vorbestimmten Eingriffsstelle an der Ventilstange zum Einleiten der Einstellkraft mit. Vorzugsweise gibt der Mitnehmer in dessen Demontagezustand die Stellventilstange stets vollständig derart von dem Abtriebsteil frei, dass die Eingriffsstelle der von dem Stellantrieb betriebenen Stellventilstange ohne Mitnahmeeingriff an dem Abtriebsteil vorbeigestellt werden kann.

Des Weiteren kann die Stellgerätanordnung ein Joch oder eine Laterne zum Tragen eines vorzugsweise pneumatischen Stellantriebs, eines vorzugsweise pneumatischen Stellantrieb und/oder eines durch einen Stellantrieb stellbaren Stellventils umfassen.

Weitere Ausgestaltungen sind in den Unteransprüchen angegeben.

Weitere Eigenschaften, Vorteile und Merkmale der Erfindung werden durch die folgende Beschreibung einer bevorzugten Ausführung anhand der beiliegenden Zeichnungen deutlich, in denen zeigen:
- Figur 1a: Stellgerät mit einer erfindungsgemäßen Justiereinrichtung, deren Abtriebsteil in sich einer mittigen Position befindet;
- Figur 1b: ein Stellgerät gemäß Figur 1, bei dem das Abtriebsteil der erfindungsgemäßen Justiereinrichtung sich in einer unteren Position befindet;
- Figur 2a: die erfindungsgemäße Justiereinrichtung und das Jochs gemäß der Detailansicht C der Figur 1a;
- Figur 2b: die Detailansicht C* der Justiereinrichtung und des Jochs gemäß Figur 1b;
- Figur 3: eine erste perspektivische Ansicht einer erfindungsgemäßen Justiereinrichtung, die an (nur teilweise dargestellten) Joch angeflanscht ist.
- Figur 4: eine andere perspektivische Ansicht einer anderen Ausführung einer erfindungsgemäßen Justiereinrichtung an einem Joch;
- Figur 5: eine Seitenansicht der erfindungsgemäßen Justiereinrichtung;
- Figur 6: die Schnittansicht D-D der Justiereinrichtung gemäß Figur 5;
- Figur 7: die Justiervorrichtung gemäß Figur 3 mit komplett dargestelltem Joch 11; und
- Figur 8: eine andere bevorzugte Ausführung einer erfindungsgemäßen Justiereinrichtung.

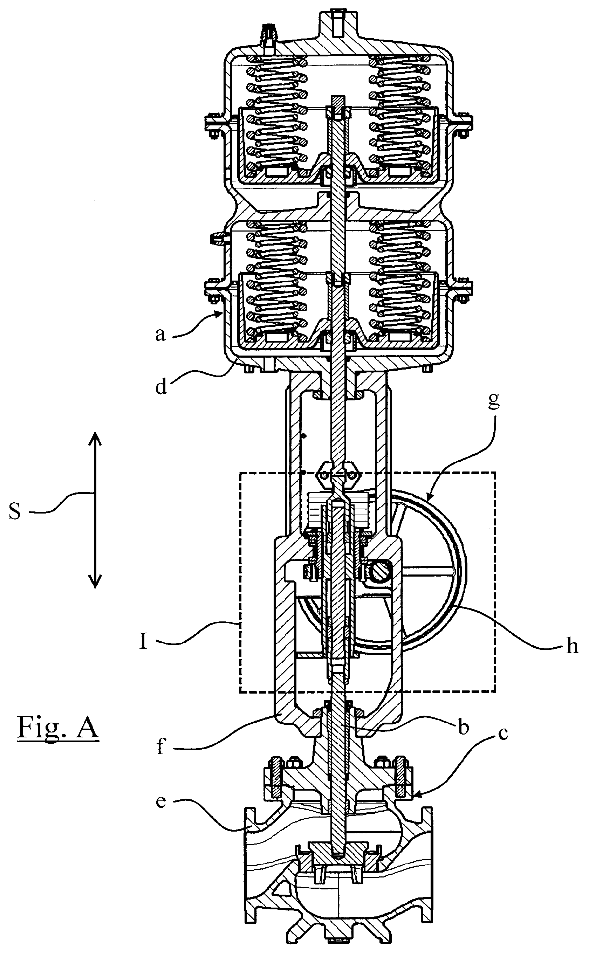

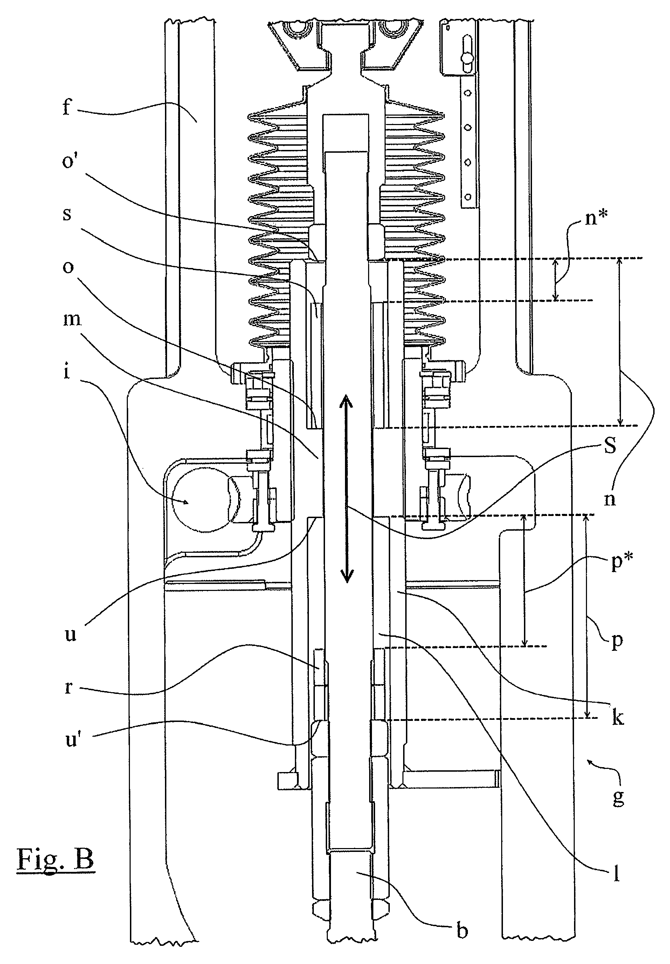

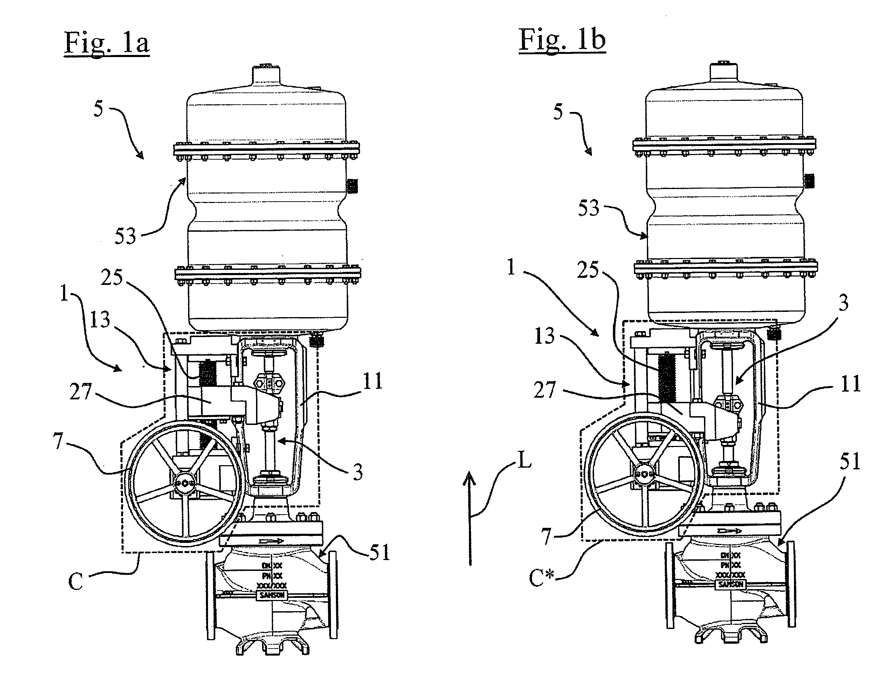

In den Figuren 1 bis 8 ist eine erfindungsgemäße Justiereinrichtung im Allgemeinen mit der Bezugsziffer 1 versehen. Mittels der Justiereinrichtung 1 wird die Lage einer Stellventilstange 3 eines vorzugsweise pneumatischen Stellgeräts in Stellrichtung S, das eist insbesondere parallel zur Längsrichtung L nach oben oder unten, vorzugsweise manuell ein- oder nachgestellt. Zum vorzugsweise manuellen Betätigen der Justiereinrichtung kann diese ein Handrad 7 aufweisen.

Figur 1a zeigt ein Stellgerät 5, das ein Stellventil 51 umfasst, durch das eine Gas- oder Fluidleitung einer prozesstechnischen Anlage, wie einer petrochemischen Anlage, einer Brauerei, eines Kraftwerks oder dergleichen vorzugsweise unterschiedlich weit geöffnet und/oder geschlossen werden kann, einen Stellantrieb 53, der zum Beispiel pneumatisch oder elektrisch betätigt sein kann.

Ein pneumatischer Stellantrieb 53 kann dazu ausgelegt sein, bei Ausfall des pneumatischen Versorgungsdrucks aufgrund einer Federvorspannung das Stellventil 51 vollständig zu schließen oder zu öffnen. Dazu ist ein Ventilglied (nicht sichtbar) des Stellventils 51 kraftübertragungsmäßig mittels einer Stellventilstange 3 an den Stellantrieb 53 gekoppelt. Die Stellventilstange 3 umfasst vorzugsweise eine Antriebsstage 3a und eine Ventilstange 3b, die mit einer Stangenkopplung 55 koaxial gekoppelt sind.

Zwischen einem Stellantrieb 53 und einem Stellventil 51 ist gattungsgemäß ein Joch 11 als Teil des Stellgeräts vorgesehen, das zum Befestigen des Stellantriebs 53 am Stellventil 51 dient. Das Joch 11 hat in Längsrichtung L zwei gegenüberliegende Öffnungen, durch die die Stellventilstange 3 ragt, insbesondere eine stellantriebsseitige Öffnung für die Antriebsstange 3a und eine ventilseitige Öffnung für die Ventilstange 3b. Außerdem stellt das Joch 11 senkrecht zur Längsrichtung L eine vorzugsweise durchgängige Öffnung um Zugreifen auf die Stellventilstange 3 bereit. Seitlich an dem Joch 11 ist die erfindungsgemäße Justiereinrichtung 1 angeordnet.

Bei Figur 1a ist das Abtriebsteil 27 in einer mittleren Stellung an der Schneckenwelle 25 dargestellt, von der aus sich das Abtriebsteil 27 ungehindert in beide Längsrichtungen L bewegen kann, also auf- und abwärts, und dabei mittels des Mitnehmers 31 die Stellstange 3 in dessen jeweilige Stellrichtung S mitnehmen könnte, insbesondere ohne zuvor eine freie Wegstrecke überwinden zu müssen. Folglich kann in der in Figur 1a dargestellten Position des Abtriebsteils 27 und der damit verbundenen Stellstange 3 durch Betätigen des Handrads 7 wahlweise eine geöffnetere oder geschlossenere Position eines (nicht dargestellten) Ventilglieds des Stellventils 51 eingestellt werden.

Figur 1b zeigt das Abtriebsteil 27 der Justiereinrichtung 1 in einer zweiten Position nahe dem ventilseitigen Anschlag in Form des ventilseitigen Horizontalschenkels 22 des Rahmens 15. Der Mitnehmer 31 stellt auch in Figur 1b eine kraft- und/oder formschlüssige Verbindung zwischen der Justiereinrichtung 1 und der Stellventilstange 3 her, so dass sich das (nicht dargestellte) Ventilglied des Ventils 51 in oder zumindest sehr nahe einer seiner Endstellungen (vollständig geschlossen oder vollständig geöffnet) befindet.

Würde der Mitnehmer 31 demontiert, besteht erfindungsgemäß keine Verbindung mehr zwischen dem Abtriebsteil 27 der Justiereinrichtung 1 und der Stellventilstange 3, so dass die Stellventilstange 3 durch den Stellantrieb 53 völlig unbeeinflusst von der Justiereinrichtung 1 gestellt werden kann. Anders gesagt würde das Ventilglied des Stellventils 51 im demontierten Zustand des Mitnehmers 31 nur durch das Stellen durch den Stellantrieb 53 betätigt. Eine Ein- oder Nachstellung der Lage der Stellventilstange 3 kann dann nicht durchgeführt werden.

Bei einer bevorzugten Ausführung der Erfindung kann die Stellventilstange 3, wenn der Mitnehmer 31 demontiert ist, zwischen den Endstellungen des Stellventils 51 und/oder des Stellantriebs frei auf- und ab bewegt werden.

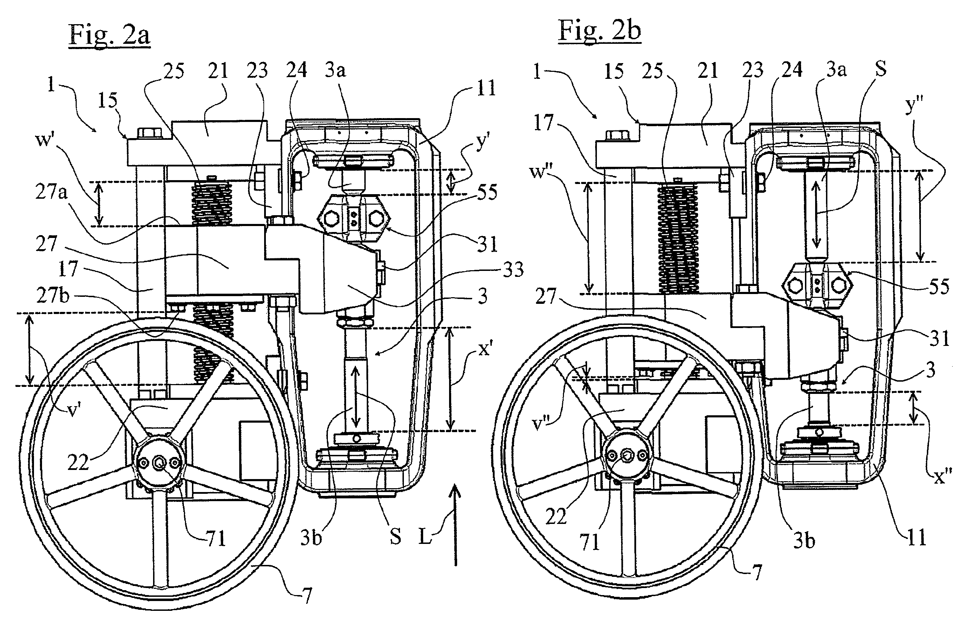

Figur 2a bzw. 2b zeigt die Detailansicht C bzw. C* der Figuren 1a bzw. 1b. Die Figuren 2a und 2b zeigen nur die erfindungsgemäße Justiereinrichtung 1 und das Joch 11, an dem die Justiereinrichtung 1 angeflanscht ist sowie den Abschnitt der Stellventilstange 3, der sich innerhalb des Jochs oder der Laterne 11 befindet. Eine Tragstruktur 13 umfasst einen vorzugsweise starren und formstabilen Rahmen 15, der U-förmig oder O-förmig sein kann und der eine, zwei oder drei Längssäulen 17 hat, die im Wesentlichen parallel zu der Längsrichtung L und/oder der Stellventilstange 3 ausgerichtet sind.

Vorzugsweise umfasst die Tragstruktur 13 genau zwei Horizontalschenkel 21, 22, die sich im Wesentlichen quer zu den Längssäulen 17 erstrecken und zusammen mit den Längssäulen 17 den Rahmen 15 bilden. Wenn der Rahmen 15, wie in den Figuren 1 und 2 dargestellt, O-förmig ist, kann eine Längssäule 17, die der Stellventilstange 3 zugewandt ist, einen Montageflansch 23 bilden, so dass die Tragstruktur 13 an dem Joch 11 mit Schrauben 24 befestigt werden kann. Ist der Rahmen 15 U-förmig, können zwei gegenüberliegende Horizontalschenkel 21, 22 je einen Montageflansch zum Anbringen der Justiereinrichtung 1 an dem Joch 11 bilden (nicht dargestellt).

Das Handrad 7 der erfindungsgemäßen Justiereinrichtung 1 kann über eine Gewindespindel 25 ein Abtriebsteil 27 in Längsrichtung L der Gewindespindel 25 auf und ab bewegen, das die Stellventilstange 3 mitnimmt, so dass eine insbesondere manuelle Einstellkraft auf die Stellventilstange 3 übertragen wird, um das Ventilglied des Stellventils 51 einzustellen oder nachzustellen. Beispielsweise kann das Ventil in seine geschlossene Stellung eingestellt werden, falls der Stellantrieb 53 ausfällt, indem ein Betätigungssteil der Justiereinrichtung 1, hier ein Handrad 7, das Abtriebsteil 27 betätigt (geschlossene Stellung nicht, sondern so in seine geschlossene oder eine geöffnete Stellung). Außerdem kann das Stellgerät 5 mit der Justiereinrichtung 1 auch nachgestellt werden, etwa wenn sich ein Versorgungsdruck des Stellantriebs 53 geändert hat, oder um bei einem verschlissenen Ventil 51 eine Endstellung der Stellventilstange 3 zum abdichtenden Schließen des Ventils 51 zu kalibrieren.

Bei den Figuren 2a und 2b unterscheidet sich die Position des Abtriebsteils 27 an der Gewindespindel 25 sowie die Lage der Stellventilstange 3, da diese durch den Mitnehmer 31 vom Abtriebsteil 27 mitgenommen wird. Der Mitnehmer 31 erstreckt sich vorzugsweise in Längsrichtung L nur innerhalb eines Mitnehmersitzes und einer Mitnehmeraufnahme 37 und /oder hat insbesondere keinen sich über einen Mitnehmersitz in Längsrichtung L hinaus erstreckenden Abschnitt, der einstückig mit dem Mitnehmer ausgebildet ist.

In Figur 2a (2b) ist zu erkennen, dass der Abstand w' (w") zwischen der Abtriebsteiloberseite 27a und deren Anschlag in Form des oberen Querschenkels 21 größer als die freie Stellstrecke y' (y") der Stellventilstange 3 nach oben, so dass die oberste Einstelllage der Stellstange 3 nicht durch die Justiereinrichtung 1 beschränkt ist. Der Abstand v' (v") zwischen der Unterseite 27b des Abtriebsteils 27 und dessen unteren Wegbegrenzungsanschlag in Form des unteren Querschenkels 22 ist jedoch bei dieser bevorzugten Ausführung kleiner als die freie Stellstrecke x' (x") der Stellventilstange 3 nach unten. Die maximale Einstellweite, also die Summe aus den Abständen v' und w' (v" und w") des Abtriebsteils 27 zu den beiden Querschenkeln 21, 22 ist also bei dieser bevorzugten Ausführung kleiner als die maximale freie Stellstrecke der Stellventilstange 3. Nur wenn der Mitnehmer 31 demontiert ist, kann die Stellventilstange 3 über die gesamte freie Stellstrecke gestellt werden, sofern die gegenüberliegenden Wegbegrenzungsanschläge des Stellantriebs (nicht dargestellt) und des Stellventils (nicht dargestellt) dies zulassen. Vorzugsweise ist die maximale Einstellweite größer als die durch die Wegbegrenzungsanschläge des Stellantriebs und/oder des Stellventils vorgegebene freie Stellstrecke der Stellventilstange 3, so dass mit der Justiereinrichtung 1 eine Lage der Stellventilstange 3 entlang deren gesamter freier Stellstrecke eingestellt werden kann.

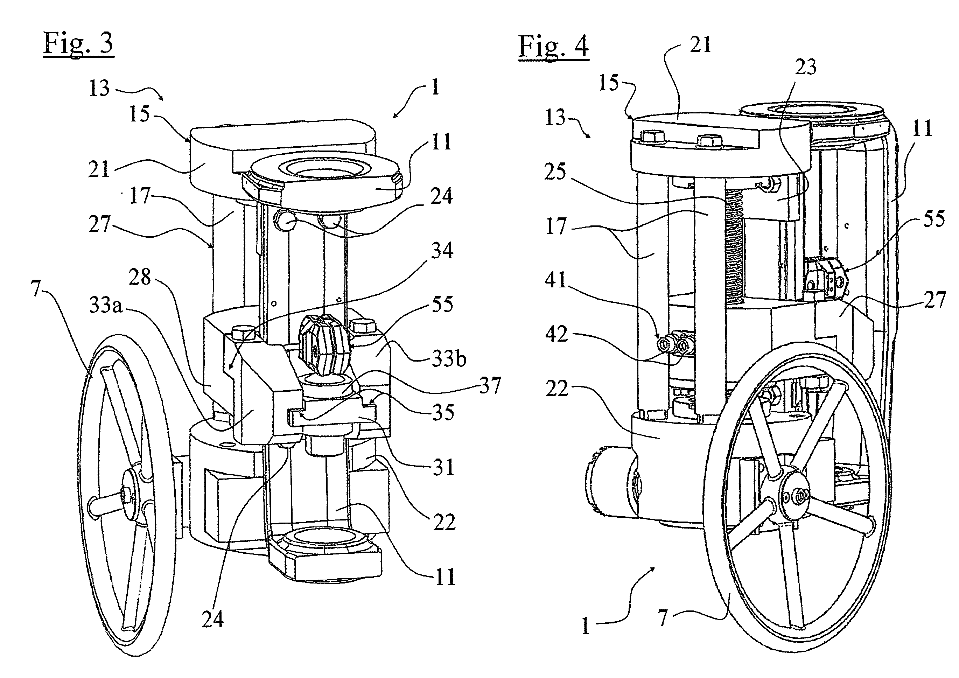

Figur 3 zeigt zum besseren Verständnis der erfindungsgemäßen Justiereinrichtung 1 das Joch 11 im Teilschnitt und keine Stellventilstange. Das Abtriebsteil 27 hat tragstrukturseitig ein Führungsteil 28, das mit der (nicht sichtbaren) Schneckenwelle kooperiert und stellstangenseitig zwei Backen 33a, 33b, die jeweils eine Führung 35 haben, in der der Mitnehmer 31 sitzt. Die Führungen 35 der Backen 33 realisieren einen Mitnehmersitz, in den der Mitnehmer 31 translatorisch eingeschoben werden kann.

Damit die Stellkraft des (nicht dargestellten) Stellantriebs keine Verschiebung der Backen 33 in Richtung des Ventils (nicht dargestellt) bewirken kann, haben das Führungsteil 28 und die Backen 33 je zumindest einen senkrecht zur Stellrichtung S ausgerichteten Vorsprung 34, so dass zumindest in Stellrichtung auf das Ventil zu eine formschlüssige Krafteinleitung von den Backen 33 in das Abtriebsteil 27 erreicht wird. Die Führung 35 kann eine Schwalbenschwanzführung sein. Der Mitnehmer 31 kann in die Führung 35 senkrecht zur Längsrichtung der Stellventilstange 3 verschoben werden. Vorzugsweise besteht zwischen dem Mitnehmer 31 und der Führung 35 ein Spiel in Stellrichtung von weniger als 2 mm, insbesondere weniger als 0,5 mm.

Stellstangenseitig kann der Mitnehmer 31 einen Zinken, beispielsweise in Form eines Zylinders, eines Keils oder eines Halbzylinders oder eines Rechtecks oder zwei Zinken haben, die vorzugsweise durch zwei sich gegenüberliegende Endabschnitte eines U-förmigen Mitnehmers 31 gebildet sind. Der Mitnehmer 31 ragt im montierten Zustand vorzugsweise mit seinen Zinken in eine Mitnehmeraufnahme 37 an der Stellstange 3. Die Mitnehmeraufnahme 37 ist vorzugsweise als Teil einer Stangenkopplung 55 zum Verbinden einer Antriebsstange 3a mit einer Ventilstange 3b ausgebildet.

Bei der Ausführung nach Figur 4 ist der Rahmen 15 am oberen Querschenkel 21 und am unteren Querschenkel 22 an das Joch 11 angeflanscht. An der ventilstangenfernen Seite des Rahmens umfasst dieser zwei Längsträger oder Längssäulen 17, die im Wesentlichen zylindrisch sind und an ihrem axial unteren Ende zum Verschrauben am unteren Querschenkel 22 eine Vier- oder Sechskantform haben.

Ein Ablaufvorsprung des Abtriebsteils 27 in Form einer Gleit- oder Wälzlagerung 42 stützt sich tangential zur Achse der Gewindespindel 25 gegen den oder die Längsträger 17 ab und realisiert so ein Linearlager 41 für das Abtriebsteil 27. Das Joch 11 steht vorzugsweise nicht in Kontakt mit dem Abtriebsteil 27. Das Linearlager 41 dient dazu, Momente um die Gewindespindel 25 der Justiervorrichtung 1 oder um die (nicht dargestellte) Stellventilstange aufzunehmen, so dass das Abtriebsteil 27 insbesondere durch die Windungen der Gewindespindel 25 nicht verdreht wird, sondern vorzugsweise stets eine reine Vertikalbewegung in Längsrichtung vollführt, so dass die erfindungsgemäße Justiervorrichtung 1 im Wesentlichen kein Schwenkspiel hat.

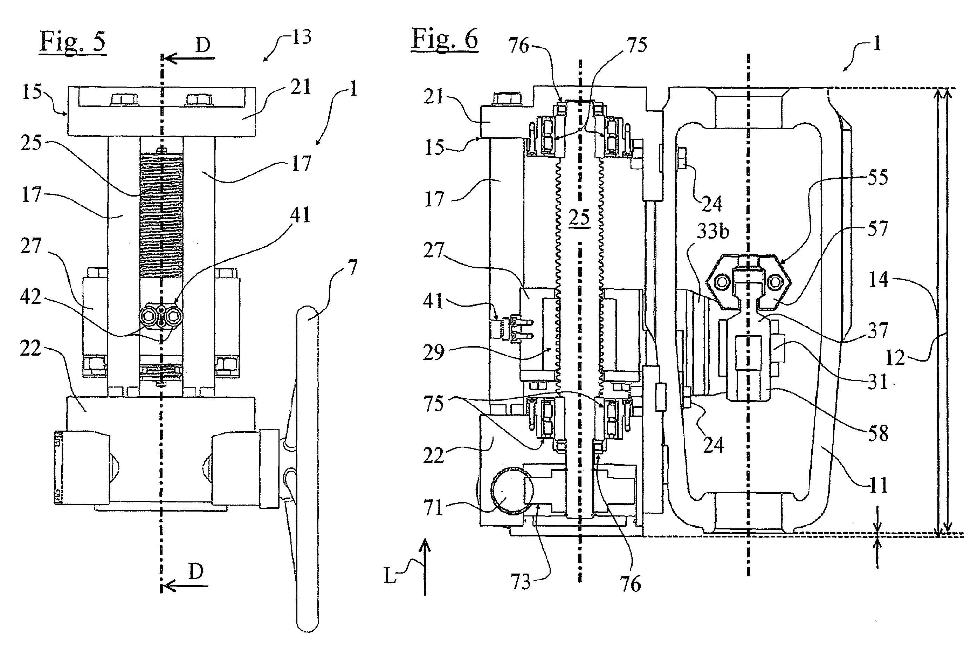

Das Abtriebsteil 27 wird anders gesagt als Schlitten in Längsrichtung L entlang der Tragstruktur 13 geführt, wobei die Gewindespindel 25 und/oder die Längsträger 17 als Schienen wirken können, so dass eine Schlitten-Schienen-Führung realisiert wird. Eine Schiene kann auch der Rahmen des Jochs 11 realisieren. Bei der Seitenansicht der Justiereinrichtung 1 gemäß Figur 5 ist zu erkennen, dass die Wälzlager 42 der Linearführung 41 spielfrei an den Längssäulen 17 des Rahmens 15 abrollen.

Figur 6 zeigt eine Schnittansicht gemäß dem Querschnitt D-D durch die Justiereinrichtung 1 (ohne Stellventilstange). Über die Schneckenwelle 71 und das Schneckenrad 73 kann die vorzugsweise manuelle Einstellkraft auf die Gewindespindel 25 und mittels eines Spindelgetriebes (nicht dargestellt), etwa in Form einer Spindelmutter, wie einer Trapezspindelmutter, an das Abtriebsteil 27 übertragen werden. Das Abtriebsteil 27 hat eine Aufnahme 29, in der eine Spindelmutter angeordnet sein kann. Die Gewindespindel 25 ist an der Tragstruktur 13 vorzugweise über Radialwälzlager 75 und Axialwälzlager 76 gelagert, die an den Querschenkeln 21, 22 des Rahmens 15 befestigt sind. So kann die Gewindespindel 25 besonders gut Einstellkräfte in Längsrichtung L aufnehmen, die durch das Auf- und Abbewegen des Abtriebsteils 27 entstehen.

Die Achsen der Gewindespindel 25 und der Stellventilstange (nicht dargestellt) sowie vorzugsweise deren Stellrichtung S erstrecken sich vorzugsweise parallel in Längsrichtung L. Die Ausdehnung 14 in Längsrichtung L der Tragstruktur 13 entsprechen im Wesentlichen der Ausdehnung 12 des Jochs 11 in Längsrichtung L und/oder ist insbesondere geringer als die Ausdehnung 12 des Jochs 11.

Einschließlich der Abdeckung des Schneckenrads 73 ist die Ausdehnung 14 in Längsrichtung L der Tragstruktur 13 oder der dargestellten Ausführungsform nur geringfügig größer als die Ausdehnung 12 des Jochs 11, vorzugsweise um weniger als 1%. Wenn die Tragstruktur 13 in Längsrichtung kleiner ist als das Joch 11, kann die erfindungsgemäße Justiereinrichtung 1 problemlos an vorhandenen Stellgeräten 4 montiert werden (vgl. Figuren 1a und 1b), indem sie an deren Joch 11 angeflanscht wird, wobei die Tragstruktur 13 im Wesentlichen nicht in den Bauraum oberhalb und/oder unterhalb des Jochs 11 eingreift, wo sich quer zur Längsrichtung L üblicherweise der pneumatischer Stellantrieb 53 und das Stellventil 51 sowie die daran angeschlossenen Rohre erstrecken.

Vorzugsweise erstreckt sich in Längsrichtung L nur ein manuelles Bedienelement, wie ein Handrad 7, über die Ausdehnung 12 und des Jochs 11 hinaus. Da beispielsweise ein Handrad 7 versetzt zu der Tragstruktur 13 davor angeordnet ist und sich vorzugsweise am stellventilseitigen Ende der Tragstruktur 13 befindet, kann eine Kollision mit dem Stellantrieb 53, dem Stellventil 51 sowie dessen Rohre vermieden werden. Wird eine maschinelle Antriebseinheit, wie ein Elektromotor, als Betätigungsteil verwendet, kann dieser in Längsrichtung L im Bauraum der Tragstruktur 13 angeordnet sein.

In dem Joch 11 befindet sich bei der in Figur 6 gezeigten bevorzugten Ausführungsform eine Stangenkopplung 55 zum Verbinden einer Antriebsstange und einer Ventilstange (beide nicht dargestellt). Die Ventilstange kann mit einem Gewindekopf in eine Ventilstangenaufnahme 58 geschraubt werden. Zwei Verbindungsschellen 57 können eine formschlüssige und/oder kraftschlüssige (Press-) Verbindung zwischen der Ventilstangenaufnahme 58 und der (nicht dargestellten) Antriebstange herstellen, die von oben in die Schellen 57 hineinragt.

Die Ventilstangenaufnahme 58 hat an ihrer Außenseite mindestens einen Vorsprung oder mindestens eine Ausnehmung zum Bereitstellen einer Mitnehmeraufnahme 37, mit dem oder der der Mitnehmer 31 im montierten Zustand insbesondere mittels seines oder seiner Zinken im Wesentlichen spielfrei kooperiert. Bezüglich der translatorischen Einschubrichtung des Mitnehmers 31 sind die Maße des Mitnehmers 31 und des Mitnehmersitzes und/oder der Mitnehmeraufnahme 37 vorzugsweise als Übergangspassung oder Gleitpassung aufeinander abgestimmt, etwa gemäß der Norm ISO 286-1 oder 286-2.

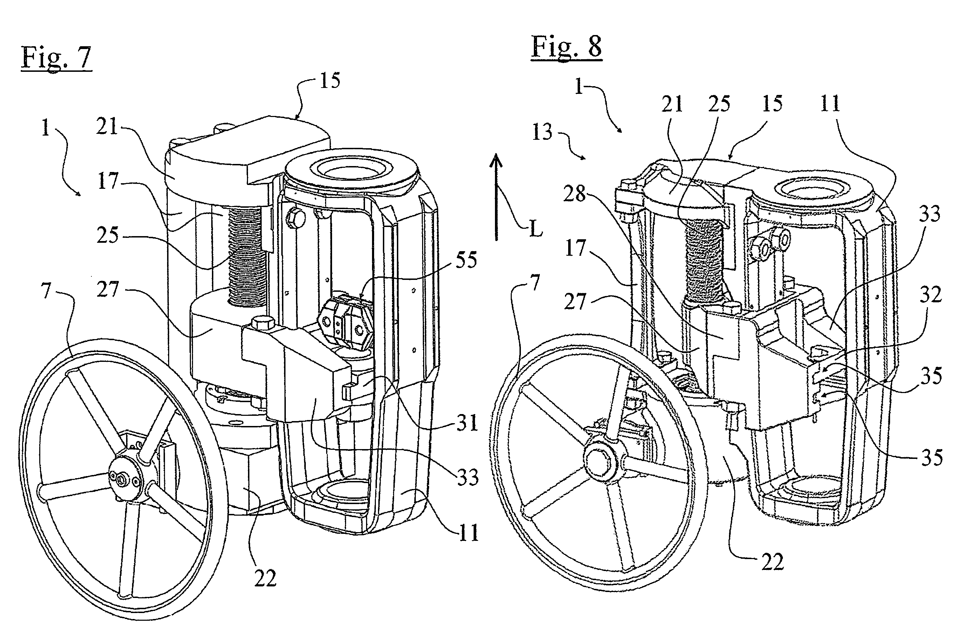

Figur 7 zeigt die bereits in den vorherigen Figuren dargestellte bevorzugte Ausführung einer erfindungsgemäßen Justiereinrichtung. In Figur 8 wird eine andere bevorzugte Ausführung dargestellt. Der Rahmen 15 der Tragstruktur 13 ist in Figur 8 kleiner als der zuvor dargestellte und formangepasst an das Joch 11. Die Tragstruktur 13 hat nur eine Längssäule 17, welche nicht als Führung für ein Linearlager des Abtriebsteils 27 verwendet wird. Stattdessen ist bei dieser bevorzugten Ausführung das Führungsteil 28 des Abtriebsteils 27, das mit den Backen 33 kooperiert, in Längsrichtung L mittels des Jochs 11 geführt.

In Längsrichtung L ist der Rahmen 15 bei dieser bevorzugten Ausführung kürzer als das Joch 11. Die Backe 33 ist einstückig und hat eine obere und eine untere Führung 35 für einen aus zwei Mitnehmerteilen 32 bestehenden Mitnehmer. Jeder Mitnehmerteil 32 überträgt eine Einstellkraft nur in einer Einstellrichtung auf die (nicht dargestellte) Stellventilstange. Die Mitnehmerteile 32 stehen in einem Kraft- oder Formschluss mit der Stellventilstange oder je einer Mitnehmerteilaufnahme.

Wird der Mitnehmer 31 oder die Mitnehmerteile 32 von einem Abtriebsteil 27 entfernt oder demontiert, können sie in einer Mitnehmerverstauaufnahme (nicht dargestellt) an der Tragstruktur 13 gelagert werden, so dass die Stellventilstange von der Justiereinrichtung 1 unbeeinflusst gestellt werden kann. Insbesondere können auch die Ventilstangenkopplung 55 und die Backen 33 des Abtriebsteils 27 nicht kollidieren. Ein Mitnehmerteil 32 kann im Montagezustand belassen werden um betriebsmäßig als Endanschlag für die Stellventilstange zu wirken.

Vorzugsweise ist der Spindelantrieb oder ein anderer Antrieb des Abtriebsteils 27 selbsthemmend ausgeführt, so dass eine Kraft von dem Stellantrieb 53 auf die Stellventilstange 3 keine Bewegung des Abtriebsteils 27 in Längsrichtung L und vor allem keine Bewegung des Betätigungsteils bewirkt. Zwar kann ein oder mehrere Signalgeber vorgesehen sein, die feststellen, ob der Mitnehmer 31 sich in einer Montageposition oder einer Verstauaufnahme am Rahmen 15 der Tragstruktur 13 befindet oder nicht, und die veranlassen, dass der Stellantrieb 53 die Stellventilstange 3 dann nicht verfährt, wenn sich der Mitnehmer 31 in der Montageposition oder nicht in der Verstauaufnahme befindet. Die selbsthemmende Auslegung des Einstellantriebs stellt darüber hinaus eine mechanische Sicherung gegen ungewolltes Verfahren bereit, um eine Bedienperson oder einen mechanischen Antrieb eines Betätigungsteils zu schützen.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Justiereinrichtung
- 3: Stellventilstange
- 3a: Antriebsstange
- 3b: Ventilstange
- 5: Stellgerät
- 7: Handrad
- 11: Joch
- 12, 14: Ausdehnung
- 13: Tragstruktur
- 15: Rahmen
- 17: Längssäule
- 21, 22: Horizontalschenkel
- 23: Montageflansch
- 24: Schraube
- 25: Gewindespindel
- 27: Abtriebsteil
- 27a: Abtriebsteiloberteilseite
- 27b: Abtriebsteilunterseite
- 28: Führungsteil
- 29: Aufnahme
- 31: Mitnehmer
- 32: Mitnehmerteil
- 33, 33a, 33b: Backen
- 34: Vorsprung
- 35: Führung
- 37: Mitnehmeraufnahme
- 41: Linearlagerung
- 42: Wälzlager
- 51: Stellventil
- 53: Stellantrieb
- 55: Stangenkopplung
- 57: Verbindungsschellen
- 58: Ventilstangenaufnahme
- 71: Schneckenwelle
- 73: Schneckenrad
- 75: Radialwälzlager
- 76: Axialwälzlager
- a: Antrieb
- b: Stellventilstange
- c: Stellventil
- d: Antriebsgehäuse
- e: Ventilgehäuse
- f: Joch
- g: Justiereinrichtung
- h: Handrad
- i: Schneckengetriebe
- k: Spindelmutter
- 1: Axialdurchgang
- L: Längsrichtung
- m: Mitnehmer
- n: oberer Freilaufbereich
- n*: Freilauf
- o: obere Mitnehmeranschlagsseite
- o': oberer Gegenanschlag
- p: unterer Freilaufbereich
- p*: unterer Freilauf
- r, s: Distanzhülse
- S: Stellrichtung
- u: untere Mitnehmeranschlagsseite
- u': untere Gegenanschlagsseite
- v', v": unterer Abstand
- w', w": oberer Abstand
- x', x": untere freie Stellstrecke
- y', y": obere freie Stellstrecke

## Patentansprüche

1. Justiereinrichtung (1) zum Ein- oder Nachstellen der Lage einer Stellventilstange (3) eines Stellgeräts (5) einer prozesstechnischen Anlage, wie einer petrochemischen Anlage, einer Brauerei, eines Kraftwerks oder dergleichen, umfassend: eine Tragstruktur (13) zum Anbringen an ein Joch (11) oder eine Laterne des Stellgeräts (5), ein Betätigungsteil, wie ein Handrad (7), zum Einleiten einer Einstellkraft, ein einstellkraftübertragungsgemäß mit dem Betätigungsteil verbundenes Abtriebsteil (27), das zum Übertragen der Einstellkraft die Stellventilstange (3) mitnimmt, wobei die Justiereinrichtung einen an- und demontierbaren Mitnehmer (31) aufweist, der im Montagezustand einen Kraft- oder Formschluss zwischen dem Abtriebsteil (27) und der Stellventilstange (3) zum unmittelbaren Übertragen der Einstellkraft zumindest in einer Einstellrichtung bereitstellt, **dadurch gekennzeichnet, dass** im Demontagezustand die Stellbewegung der Stellventilstange (3) durch das Stellgerät (5) unbeeinflusst von der Justiereinrichtung (1) bleibt.

2. Justiereinrichtung (1) nach Anspruch 1, **dadurch gekennzeichnet, dass** im Demontagezustand jegliche in das Betätigungsteil eingeleitete Einstellkraft nicht auf die Stellventilstange (3) übertragen wird.

3. Justiereinrichtung (1) nach einem der vorstehenden Ansprüche, **dadurch gekennzeichnet, dass** der Mitnehmer (31) eine Zinkenstruktur umfasst, wobei im Montagezustand die Zinkenstruktur sowohl mit dem Abtriebsteil (27) als auch mit der Stellventilstange (3) in einem formschlüssigen Verriegeleingriff steht.

4. Justiereinrichtung (1) nach einem der vorstehenden Ansprüche, **dadurch gekennzeichnet, dass** der Mitnehmer (31) zweigeteilt ist, wobei ein Mitnehmerteil (32) einen Kraft- oder Formschluss zwischen dem Abtriebsteil (27) und der Stellventilstange (3) zum unmittelbaren Übertragen der Einstellkraft nur in einer Einstellrichtung und ein anderer Mitnehmerteil (32) einen Kraft- oder Formschluss zwischen dem Abtriebsteil (27) und der Stellventilstange (3) zum unmittelbaren Übertragen der Einstellkraft zumindest in einer anderen Einstellrichtung bereitstellt.

5. Justiereinrichtung (1) nach einem der vorstehenden Ansprüche, **dadurch gekennzeichnet, dass** das Abtriebsteil (27) einen Mitnehmersitz zum Aufnehmen des Mitnehmers (31) und die Stellventilstange (3) eine Mitnehmeraufnahme (37) aufweisen.

6. Justiereinrichtung (1) nach einem der vorstehenden Ansprüche, **dadurch gekennzeichnet, dass** in dem Montagezustand der Mitnehmer (31) sowohl in dem Mitnehmersitz als auch in der Mitnehmeraufnahme (37) sitzt, so dass die Einstellkraft unmittelbar von dem Abtriebsteil (27) über den Mitnehmer (31) auf die Stellventilstange (3) übertragen wird.

7. Justiereinrichtung (1) nach Anspruch 5 oder 6, **dadurch gekennzeichnet, dass** der Mitnehmersitz und/oder die Mitnehmeraufnahme (37) mit einem Signalgeber versehen ist, der bei Einnahme und/oder Nicht-Einnahme der Montageposition des wenigstens einen Mitnehmers (31) ein Montage- oder Demontagesignal abgibt.

8. Justiereinrichtung (1) nach einem der vorstehenden Ansprüche, **gekennzeichnet, durch** eine Verstauaufnahme zum Unterbringen des wenigstens einen Mitnehmers (31) in dessen Demontagezustand.

9. Justiereinrichtung (1) nach Anspruch 8, **dadurch gekennzeichnet, dass** die Verstauaufnahme mit einer Sicherungseinrichtung versehen ist, die bei Belegung der Verstauaufnahme durch den Mitnehmer (31) eine Verstellung des Betätigungsteils blockiert, und/oder mit einem Signalgeber versehen ist, der der bei Belegung und/oder Nicht-Belegung der Verstauaufnahme durch den Mitnehmer (31) ein Mitnehmerverstau- und/oder Mitnehmereinsatzsignal abgibt und.

10. Justiereinrichtung (1) nach einem der vorstehenden Ansprüche, **dadurch gekennzeichnet, dass** das Abtriebsteil (27) längs der Tragstruktur (13) ablaufend geführt ist.

11. Justiereinrichtung (1) nach Anspruch 10, **dadurch gekennzeichnet, dass** eine Schlitten-Schienen-Führung vorgesehen ist, bei der die Schienenfunktion zumindest teilweise durch eine Schnecke eines das Abtriebsteil (27) antreibenden Schneckengetriebes und/oder die Tragstruktur (13) realisiert ist und/oder das Abtriebsteil (27) einen Ablaufvorsprung aufweist.

12. Justiereinrichtung (1) nach einem der vorstehenden Ansprüche, **dadurch gekennzeichnet, dass** ein Schneckengetriebe und/oder ein Spindelgetriebe, zwischen dem Betätigungsteil und dem Abtriebsteil (27) einstellkraftübertragungsgemäß angeordnet ist, wobei eine Gewindespindel (25) mit dem Abtriebsteil (27) für eine lineare Hin- und Herstellbewegung des Abtriebsteils (27) in einem Gewindeeingriff steht, und/oder die Tragstruktur (13) einen geschlossenen oder zumindest stellventilstangenseitig offenen Rahmen (15) aufweist, wobei insbesondere an Horizontalschenkeln (21, 22) des Rahmens (15) die sich vertikal erstreckende Gewindespindel (25) gelagert ist und/oder die Horizontalschenkel (21, 22) durch wenigstens eine sich in Stellrichtung (S) erstreckende Längssäule (17) fest verbunden sind.

13. Stellgerätanordnung für eine prozesstechnische Anlage, wie eine petrochemische Anlage, eine Brauerei, ein Kraftwerk oder dergleichen, mit einer Stellventilstange (3), die von einem Stellantrieb (53) stellbar ist, und einer nach einem der vorstehenden Ansprüche ausgebildeten Justiereinrichtung (1), welche die Stellventilstange (3) zum Ein- oder Nachstellen deren Lage an einer vorbestimmten Eingriffsstelle an der Stellventilstange (3) zum Einleiten der Einstellkraft mitnimmt.

14. Stellgerätanordnung nach Anspruch 11, umfassend ein Joch (11) oder eine Laterne zum Tragen eines pneumatischen Stellantriebs (53) und/oder eines durch einen Stellantrieb (53) stellbaren Stellventils (51).

## Claims

1. Adjusting device (1) for adjusting or readjusting the position of a control valve rod (3) of an actuator (5) of a processing plant, such as a petrochemical plant, a brewery, a power plant or the like, comprising:
a support structure (13) for attaching to a yoke (11) or a lantern of the actuator (5), an actuator member, such as a hand wheel (7), for introducing an adjusting force, an output member (27), coupled to the actuator member according to an adjusting force transmission, which carries the control valve rod (3) for transmitting the adjusting force, wherein the adjusting device includes a mountable and removable carrier (31) which in the mounting state provides a force-fit or form-fit between the output member (27) and the control valve rod (3) for directly transmitting the adjusting force at least in one adjusting direction, **characterized in that** in the disassembly state the control movement of the control valve rod (3) by the actuator (5) is unaffected of the adjusting device (1).

2. Adjusting device (1) according to claim 1, **characterized in that** in the disassembly state any adjusting force introduced into the actuator member is not transmitted to the control valve rod (3).

3. Adjusting device (1) according to any previous claim, **characterized in that** the carrier (31) comprises a tine structure wherein in the mounting state the tine structure is in a from-fitting locking engagement with both the output member (27) and the control valve rod (3).

4. Adjusting device (1) according to any previous claim, **characterized in that** the carrier (31) is split in two parts wherein one carrier part (32) provides a force-fit or a form-fit between the output member (27) and the control valve rod (3) for directly transmitting the adjusting force in only one adjusting direction and another carrier part (32) provides a force-fit or a form-fit between the output member (27) and the control valve rod (3) for directly transmitting the adjusting force in at least another adjusting direction.

5. Adjusting device (1) according to any previous claim, **characterized in that** the output member (27) includes a carrier seat for receiving the carrier (31) and the control valve rod (3) includes a carrier reception (37).

6. Adjusting device (1) according to any previous claim, **characterized in that** in the mounting state the carrier (31) is seated in both the carrier seat and the carrier reception (37) such that the adjusting force is transmitted directly from the output member (27) via the carrier (31) to the control valve rod (3).

7. Adjusting device (1) according to claim 5 or 6, **characterized in that** the carrier seat and/or the carrier reception (37) include a signal emitter which emits a mounting or disassembly signal when the at least one carrier (31) reaches and/or does not reach the mounting position.

8. Adjusting device (1) according to any previous claim, **characterized by** a storing reception for accommodating the at least one carrier (31) in its disassembly state.

9. Adjusting device (1) according to claim 8, **characterized in that** the storing reception includes a securing device which blocks an adjustment of the actuator member when the storing reception is occupied by the carrier (31), and/or the storing reception includes a signal emitter which emits a carrier storing signal and/or a carrier operation signal when the storing reception is occupied and/or not occupied by the carrier (31).

10. Adjusting device (1) according to any previous claim, **characterized in that** the output member (27) is guided along the support structure (13) in a running manner.

11. Adjusting device (1) according to claim 10, **characterized in that** a slide-rail-guidance is provided where the rail function is at least partly realized by a worm of a worm gear driving the output member (27), and/or by a support structure (13), and/or the output member (27) includes a running protrusion.

12. Adjusting device (1) according to any previous claim, **characterized in that** a worm gear and/or a spindle gear is arranged between the actuator member and the output member (27) according to an adjusting force transmission wherein a threaded spindle (25) is threadingly engaged with the output member (27) for a linear back and forth control movement of the output member (27), and/or the support structure (13) includes a frame (15) which is closed or at least open at the side of the control valve rod wherein particularly the vertically extending threaded spindle (25) is mounted at horizontal legs (21, 22) of the frame (15), and/or the horizontal legs (21, 22) are fixedly coupled by at least one longitudinal pillar (17) extending in the controlling direction.

13. Actuator assembly for a processing plant, such as petrochemical plant, a brewery, a power plant or the like, comprising a control valve rod (3) which can be controlled by an actuating drive (53) and an adjusting device (1), configured according to any previous claim, which carries the control valve rod (3) for adjusting or readjusting its position at a predetermined engagement position at the control valve rod (3) for introducing the adjusting force.

14. Actuator assembly according to claim 11, comprising a yoke (11) or a lantern for carrying a pneumatic actuating drive (53) and/or control valve (51) which can be controlled by an actuating drive (53).

## Revendications

1. Dispositif d'ajustage (1) pour le réglage ou le réajustage de la position d'une tige de soupape de réglage (3) d'un appareil de réglage (5) d'une installation de processus techniques, comme une installation pétrochimique, une brasserie, une centrale électrique ou similaire, comprenant : une structure porteuse (13) à monter sur un étrier (11) ou une potence de l'appareil de réglage (5), une partie d'actionnement comme un volant (7) pour induire une force de réglage, une partie de sortie (27) reliée à la partie d'actionnement de manière à transmettre une force de réglage, qui entraîne la tige de soupape de réglage (3) afin de transmettre la force de réglage, dans lequel le dispositif d'ajustage présent un doigt d'entraînement (31) montable et démontable, qui en l'état de montage fournit une complémentarité de force ou de forme entre la partie de sortie (27) et la tige de soupape de réglage (3) pour transmettre directement la force de réglage au moins dans une direction de réglage, **caractérisé en ce que** en l'état de démontage le mouvement de réglage de la tige de soupape de réglage (3) par l'intermédiaire de l'appareil de réglage (5) reste non influencé par le dispositif d'ajustage (1).

2. Dispositif d'ajustage (1) selon la revendication 1, **caractérise en ce que** en l'état de démontage toute force de réglage induite dans la partie d'actionnement n'est pas transmis à la tige de soupape de réglage (3).

3. Dispositif d'ajustage (1) selon une des revendications précédentes, **caractérisé en ce que** le doigt d'entraînement (31) comprend une structure dentée, dans lequel en l'état de montage la structure dentée vient en prise de verrouillage par complémentarité de forme tant avec la partie de sortie (27) qu'avec la tige de soupape de réglage (3).

4. Dispositif d'ajustage (1) selon une des revendications précédentes, **caractérisé en ce que** le doigt d'entraînement (31) est divisé en deux, dans lequel une partie de doigt d'entraînement (32) fournit une complémentarité de force ou de forme entre la partie de sortie (27) et la tige de soupape de réglage (3) pour transmettre directement la force de réglage seulement dans une direction de réglage et une autre partie de doigt d'entraînement (32) fournit une complémentarité de force ou de forme entre la partie de sortie (27) et la tige de soupape de réglage (3) pour transmettre directement la force de réglage au moins dans une autre direction de réglage.

5. Dispositif d'ajustage (1) selon une des revendications précédentes, **caractérisé en ce que** la partie de sortie (27) présente un siège de doigt d'entraînement pour recevoir un doit entraînement (31) et la tige de soupape de réglage (3) présente un réceptacle de doigt d'entraînement (37).

6. Dispositif d'ajustage (1) selon une des revendications précédentes, **caractérisé en ce que** en l'état de montage le doigt d'entraînement (31) a une assise tant dans le siège de doigt d'entraînement que dans le réceptacle de doigt d'entraînement (37), de sorte que la force de réglage soit transmise directement de la partie de sortie (27) par l'intermédiaire du doigt d'entraînement (31) à la tige de soupape de réglage (3).

7. Dispositif d'ajustage (1) selon la revendication 5 ou 6, **caractérisé en ce que** le siège de doigt d'entraînement et/ou le réceptacle de doigt d'entraînement (37) est pourvu d'un générateur de signaux, qui en cas d'adoption et/ou de non adoption de la position de montage d'au moins un doigt d'entraînement (31) émet un signal de montage ou de démontage.

8. Dispositif d'ajustage (1) selon une des revendications précédentes, **caractérisé par** un réceptacle de stockage pour renfermer au moins un doigt d'entraînement (31) en l'état de démontage de ce dernier.

9. Dispositif d'ajustage (1) selon la revendication 8, **caractérisée en ce que** le réceptacle de stockage est pourvu d'un dispositif de sécurité, qui en cas d'occupation du réceptacle de stockage par un doigt d'entraînement (31) bloque un réglage de la partie d'actionnement et/ou est pourvu d'un générateur de signaux, qui en cas d'occupation et/ou de non occupations du réceptacle de stockage par le doigt d'entraînement (31) émet un signal de stockage de doigt d'entraînement et/ou un signal d'engagement de doigt d'entraînement.

10. Dispositif d'ajustage (1) selon une des revendications précédentes, **caractérisé en ce que** la partie de sortie (27) est guidée de manière à se dérouler le long de la structure porteuse (13).

11. Dispositif d'ajustage (1) selon la revendication 10, **caractérisée en ce que** une glissière rails-chariot est prévue sur laquelle la fonction de rails est réalisée au moins partiellement par une vis sans fin d'un entraînement à vis sans fin entraînant la partie de sortie (27) et/ou la structure porteuse (13) et/ou la partie de sortie (27) présente une protubérance de déroulement.

12. Dispositif d'ajustage (1) selon une des revendications précédentes, **caractérisé en ce que** une transmission à vis sans fin et/ou une transmission à broche est disposée entre la partie d'actionnement et la partie de sortie (27) de manière à transmettre une force de réglage, dans lequel une broche unité (25) vient en prise par filetage avec la partie de sortie (27) pour un mouvement d'avant en arrière linéaire de la partie de sortie (27) et/ou la structure porteuse (13) présente un châssis ouvert (15) au moins du côté de la tige de soupape de réglage ou fermé, dans lequel notamment sur les plans horizontaux (21, 22) du châssis (15) la broche filetée s'étendant verticalement (25) est positionnée et/ou les plans horizontaux (21, 22) sont reliés solidement par au moins une colonne longitudinale (17) s'étendant dans la direction de réglage (S).

13. Dispositif d'appareil de réglage pour une installation de processus techniques, comme une installation pétrochimique, une brasserie, une centrale électrique ou similaire, comportant une tige de soupape de réglage (3), qui peut être réglé par un servomoteur (53) et un dispositif d'ajustage (1) conçu selon une des revendications précédentes, qui entraîne la tige de soupape de réglage (3) à des fins de réglage ou réajustage de sa position sur la un point d'intervention prédéterminé sur la tige de soupape de réglage (3) afin d'induire la force de réglage.

14. Dispositif d'appareils de réglage selon la revendication 11, comprenant un étrier (11) ou une potence pour supporter un servomoteur pneumatique (53) et/ou une soupape de réglage (51) réglable par un entraînement de réglage (53).
